# EUROPÄISCHE PATENTSCHRIFT

(11) **EP 3 660 320 B1**
(45) Veröffentlichungstag und Bekanntmachung des Hinweises auf die Patenterteilung: **06.04.2022**
(21) Anmeldenummer: 20152808.0
(22) Anmeldetag: 13.11.2017
(51) Int. Cl.: F04D 23/00, F04D 29/08, F04D 29/62, F16J 15/24, F16J 15/3212, F16J 15/3268

(54) **SEITENKANALVERDICHTER MIT DICHTUNGSANORDNUNG**
SIDE CHANNEL COMPRESSOR WITH SEALING ARRANGEMENT
COMPRESSEUR À CANAL LATÉRAL AVEC DISPOSITIF D'ÉTANCHÉITÉ

(30) Priorität: 15.11.2016 DE 102016222430
(43) Veröffentlichungstag der Anmeldung: 03.06.2020
(62) Teilanmeldung aus: 17801417.1
(73) Patentinhaber: Gardner Denver Deutschland GmbH, 97616 Bad Neustadt (DE)
(72) Erfinder: Rjabchenko, Evgenij, 97616 Salz (DE); Gans, Manuela, 97640 Mittelstreu (DE)
(74) Vertreter: Murgitroyd & Company

(56) Entgegenhaltungen:
- EP-A2- 0 708 248
- EP-A2- 1 672 222
- WO-A1-97/10439
- WO-A1-2015/020978
- DE-A1- 2 244 933
- DE-U1-202004 019 071
- JP-A- S59 128 993
- JP-U- S57 103 397

## Beschreibung

Die Erfindung betrifft einen Seitenkanalverdichter zum Verdichten eines Gases, wie Luft oder technisches Gas, gemäß dem Oberbegriff des Anspruchs 1. Der Seitenkanalverdichter ist beispielsweise als Seitenkanalgebläse ausgeführt.

Aus der JP S57-103397 U ist ein Seitenkanalgebläse mit einem Gehäuse und mit einem im Gehäuse angeordneten Laufrad bekannt. Im Laufrad sind zwei Ringnuten an gegenüberliegenden Seitenflächen ausgebildet. In jeder Ringnut sind ein ringförmiger Dichtkörper und eine wellenförmige Feder angeordnet, die den zugeordneten Dichtkörper nach radial außen drückt. Jeder Dichtkörper steht axial in Bezug auf das Laufrad gegenüber diesem nach außen vor, um an dem Gehäuse dichtend anzuliegen. Jeder Dichtkörper ist mit axialem Spiel in der jeweiligen Ringnut aufgenommen, um in axialer Richtung verlagerbar zu sein. Über die unterschiedlichen Betriebszustände des Seitenkanalgebläses treten immer wieder höhere Leckströme auf, was zu Leistungseinbußen führt. Die EP 1 672 222 A2, EP 0 708 248 A2, DE 20 2004 019 071 U1, WO 97/10439 A1 und DE 2 244 933 A offenbaren Seitenkanalverdichter des Stands der Technik. Aus der WO 2015/020978 A1 sind unterschiedliche Lamellenfedern für Motoranwendungen bekannt, die imstande sind, zwei Komponenten zu separieren. Die JP S59-128993 A offenbart eine Wirbelpumpe.

Seitenkanalverdichter sind aus dem Stand der Technik allgemein bekannt. Der Wirkungsgrad eines Seitenkanalverdichters ist unter anderem von dem auftretenden Leckstrom abhängig. Zum Vermeiden eines derartigen Leckstroms werden entsprechende Dichtungsanordnungen eingesetzt. Nachteilig ist, dass die Dichtungsanordnungen häufig über die Laufzeit des Seitenkanalverdichters verschleißen, was zu einer Reduzierung des Wirkungsgrads führt. Ferner ist die Dichtwirkung der Dichtungsanordnungen nicht immer zufriedenstellend.

Der Erfindung liegt die Aufgabe zugrunde, die Nachteile des Stands der Technik zu überwinden. Insbesondere soll ein Seitenkanalverdichter mit einem, insbesondere dauerhaften bzw. über sämtliche Betriebszustände, äußerst hohen Wirkungsgrad geschaffen werden. Insbesondere dauerhaft bzw. über sämtliche Betriebszustände soll Leckstrom vermieden sein.

Diese Aufgabe wird erfindungsgemäß durch die in dem Anspruch 1 angegebenen Merkmale gelöst. Der Kern der Erfindung liegt darin, dass die mindestens eine Dichtungseinrichtung einen Leckstrom vermeidet, welcher sich beispielsweise aufgrund vorherrschender Druckverhältnisse über den mindestens einen Spalt hinweg zwischen dem Gehäuse und dem mindestens einen Laufrad ausbildet. Der Spalt liegt so zwischen zueinander rotierenden Teilen des Seitenkanalverdichters vor.

Nachdem die mindestens eine Dichtungseinrichtung nach radial außen zwängt, insbesondere drückt, sind so im Betrieb des Seitenkanalverdichters auftretende Volumenänderungen, insbesondere aufgrund von Temperaturschwankungen, sicher ausgleichbar. Verformungen, insbesondere thermisch bedingt, der mindestens einen Dichtungseinrichtung sind so unkritisch. Günstigerweise zwängt, insbesondere drückt, die mindestens eine Dichtungseinrichtung homogen bzw. gleichmäßig nach radial außen. Der mindestens eine verbleibende Spalt zwischen dem Gehäuse und dem mindestens einen Laufrad ist so für alle Betriebszustände klein gehalten.

Die mindestens eine Dichtungseinrichtungs-Halteeinrichtung verhindert ein Wandern bzw. Verlagern der mindestens einen Dichtungseinrichtung in axialer Richtung. Die mindestens eine Dichtungseinrichtung ist so gegen axiales Wandern gesichert. Leckströme bzw. erhöhter Verschleiß sind so vermeidbar.

Die Ausgestaltung mit dem mindestens einen Federvorsprung führt dazu, dass die mindestens eine Dichtungseinrichtung nach radial außen gezwängt, insbesondere gedrückt, ist und so der mindestens eine Spalt stets klein bleibt. Die Federspannung ist in radialer Richtung wirksam. Der mindestens eine Federvorsprung ist federnd ausgeführt. Es ist von Vorteil, wenn eine Vielzahl von Federvorsprüngen vorhanden sind, die günstigerweise äquidistant zueinander angeordnet sind.

Die mindestens eine Dichtungseinrichtung ist bevorzugt ringförmig und hat günstigerweise eine nach radial außen gewandte Dichtfläche, die sich benachbart zu dem mindestens einen Laufrad, insbesondere zu dessen Tragringboden, erstreckt bzw. dort dichtend anliegt. Es ist von Vorteil, wenn die mindestens eine Dichtungseinrichtung in montiertem Zustand einen Außendurchmesser aufweist, der einem Innendurchmesser des Tragrings entspricht.

Günstigerweise ist die mindestens eine Dichtungseinrichtung durch mindestens einen Dichtungsstreifen bzw. mindestens ein Dichtungsband gebildet. Die Dichtungseinrichtung ist vorzugsweise einteilig. Es ist zweckmäßig, wenn die mindestens eine Dichtungseinrichtung zumindest teilweise Teflon aufweist, bevorzugter aus Teflon (Polytetrafluorethylen) besteht. Andere entsprechende Materialien sind alternativ einsetzbar.

Die mindestens eine Dichtungsanordnung ist günstigerweise werkzeuglos montierbar bzw. demontierbar.

Gemäß einer bevorzugten Ausführungsform ist die mindestens eine Dichtungseinrichtung selbst elastisch bzw. nachgiebig. Sie ist so günstigerweise selbst imstande, nach radial außen zu zwängen, insbesondere zu drücken. Gemäß einer vorteilhaften Ausführungsform ist die mindestens eine Dichtungseinrichtung geschäumt bzw. aus einem Schaummaterial gebildet. Gemäß einer bevorzugten Ausführungsform ist die mindestens eine Dichtungseinrichtung durch mindestens ein benachbart angeordnetes elastisches Zwängband nach radial außen gezwängt, insbesondere gedrückt, das günstigerweise auch durch die mindestens eine Dichtungseinrichtungs-Halteeinrichtung axial fixiert ist.

Die mindestens eine Dichtungseinrichtung ist gemäß einer bevorzugten Ausführungsform durch miteinander verschlungene, insbesondere miteinander verflochtene, Stränge gebildet.

Es ist von Vorteil, wenn in dem Gehäuse mindestens ein Seitenkanal ausgebildet ist. Günstigerweise weist das Gehäuse außerdem mindestens eine Gas-Einlassöffnung zum Einführen des zu verdichtenden Gases in den mindestens einen Seitenkanal auf. Das Gehäuse hat vorzugsweise ferner mindestens eine Gas-Auslassöffnung zum Abführen des verdichteten Gases aus dem mindestens einen Seitenkanal. Es ist zweckmäßig, wenn das Gehäuse zweiteilig ist.

Es ist von Vorteil, wenn das mindestens eine Laufrad durch einen Antrieb, insbesondere einen Elektroantrieb, drehantreibbar ist.

Weitere vorteilhafte Ausgestaltungen der Erfindung sind in den Unteransprüchen angegeben.

Der mindestens eine Haltevorsprung gemäß dem Unteranspruch 3 verhindert funktionssicher eine Relativbewegung in axialer Richtung zwischen der mindestens einen Dichtungseinrichtungs-Halteeinrichtung und der mindestens einen Dichtungseinrichtung. Günstigerweise ist eine Vielzahl von Haltevorsprüngen vorhanden.

Die Ausgestaltung gemäß dem Unteranspruch 4 ist besonders montagefreundlich. Günstigerweise erstreckt sich der mindestens eine Haltevorsprung lediglich über eine Teillänge der Dichtungseinrichtungs-Halteeinrichtung. Alternativ, jedoch nicht gemäß dem Anspruch 4, greift der mindestens eine Haltevorsprung in die mindestens eine Dichtungseinrichtung haltend ein.

Auch die Ausgestaltung gemäß dem Unteranspruch 5 ist besonders montagefreundlich. Alternativ, jedoch nicht gemäß dem Anspruch 5, springt der mindestens eine Haltevorsprung von dem mindestens einen Haltegrundkörper nach radial innen in Bezug auf die Mittelachse vor.

Die Ausgestaltung gemäß dem Unteranspruch 6 führt zu einer Dichtungsanordnung, deren Platzbedarf äußerst gering ist.

Die Dichtungsanordnung gemäß dem Unteranspruch 7 ist zum einen äußerst kostengünstig herstellbar. Zum anderen ist eine solche Dichtungsanordnung besonders funktionssicher.

Die Ausgestaltung gemäß dem Unteranspruch 8 ergibt eine Dichtungsanordnung, die besonders wirksam ein axiales Wandern bzw. Verlagern der mindestens einen Dichtungseinrichtung gegenüber dem Gehäuse bzw. dem mindestens einen Laufrad verhindert.

Es ist zweckmäßig, wenn sich die mindestens eine Dichtungseinrichtungs-Halteeinrichtung an dem Gehäuse beidseits axial in Bezug auf die Mittelachse abstützt. Günstigerweise stützt sich die mindestens eine Dichtungseinrichtungs-Halteeinrichtung an mindestens einer Schulter, Flanke und/oder Seitenwand des Gehäuses ab.

Gemäß dem Unteranspruch 10 springt der mindestens eine Federvorsprung von dem mindestens einen Haltegrundkörper nach radial innen in Bezug auf die Mittelachse vor. Alternativ, jedoch nicht gemäß dem Anspruch 10, springt dieser von dem mindestens einen Haltegrundkörper nach radial außen in Bezug auf die Mittelachse vor.

Die Ausgestaltung gemäß dem Unteranspruch 11 führt zu einer Dichtungseinrichtungs-Halteeinrichtung, die besonders kostengünstig herstellbar und funktionssicher ist. Der mindestens eine Federvorsprung ist somit ein Biegeteil. Es ist zweckmäßig, wenn die mindestens eine Dichtungseinrichtungs-Halteeinrichtung aus einem Metallmaterial bzw. einem Metallkörper gebildet ist.

Die Dichtungsanordnung gemäß dem Unteranspruch 13 liefert eine besonders hohe Dichtwirkung. Günstigerweise sind der mindestens eine Haltevorsprung und der mindestens eine Federvorsprung bezogen auf die Mittelachse axial beabstandet zueinander angeordnet.

Die mindestens eine Dichtungseinrichtungs-Halteeinrichtung gemäß dem Unteranspruch 14 ist besonders kostengünstig herstellbar und funktionssicher. Der mindestens eine Haltevorsprung, der mindestens eine Federvorsprung und der mindestens eine Haltegrundkörper sind so günstigerweise einteilig bzw. einstückig miteinander verbunden.

Nachfolgend werden unter Bezugnahme auf die beigefügte Zeichnung zwei bevorzugte Ausführungsformen der Erfindung beispielhaft beschrieben. Dabei zeigen:
- Fig. 1: einen Längsschnitt durch einen erfindungsgemäßen Seitenkanalverdichter mit angeflanschtem Antrieb,

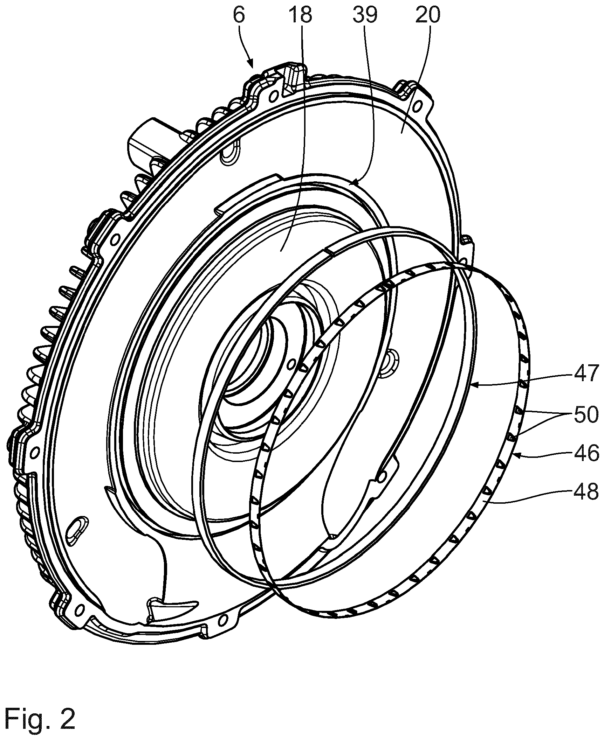

- Fig. 2: eine Explosionsansicht einer Dichtungsanordnung und eines Gehäusedeckels des in Fig. 1 gezeigten Seitenkanalverdichters,

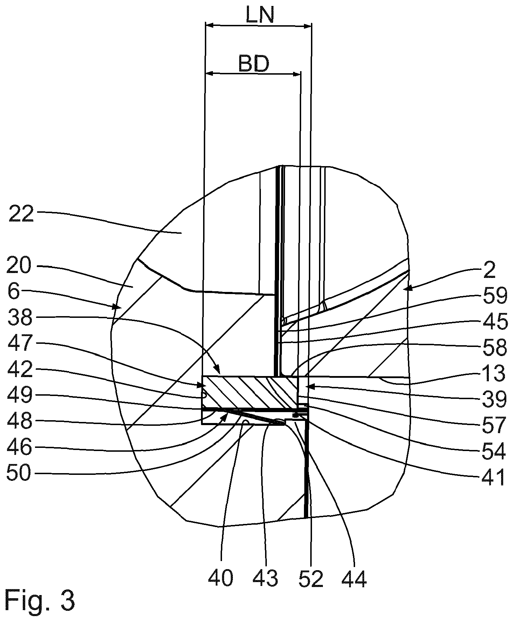

- Fig. 3: die in Fig. 1 gekennzeichnete Einzelheit III,

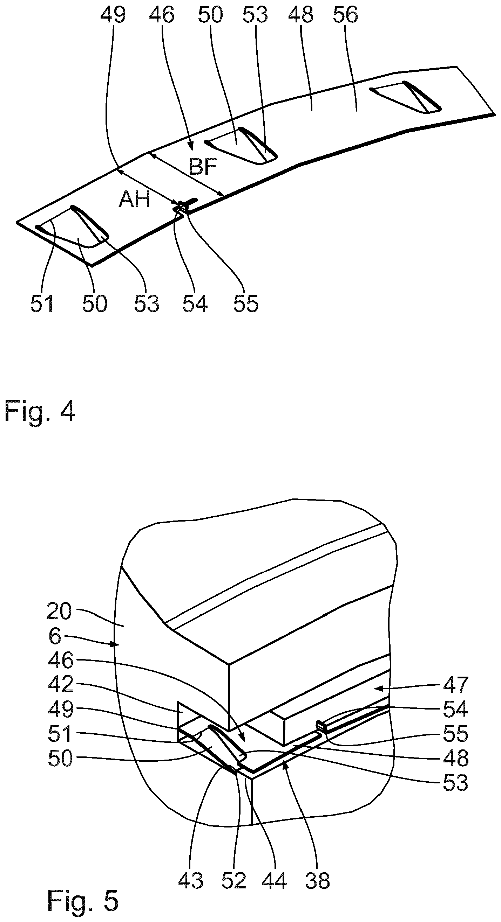

- Fig. 4: einen vergrößerten Ausschnitt der Dichtungseinrichtungs-Halteeinrichtung des in Fig. 1 dargestellten Seitenkanalverdichters,
- Fig. 5: eine vergrößerte perspektivische Teilansicht, die die Dichtungsanordnung des Seitenkanalverdichters gemäß Fig. 1 in montiertem Zustand zeigt,
- Fig. 6: eine Fig. 2 entsprechende Ansicht, die eine zweite erfindungsgemäße Ausführungsform der Dichtungsanordnung bzw. des Seitenkanalverdichters veranschaulicht,
- Fig. 7: eine vergrößerte Schnittansicht, die die Dichtungsanordnung gemäß Fig. 6 in montiertem Zustand entsprechend Fig. 3 zeigt,
- Fig. 8: eine perspektivische Teilansicht der Dichtungseinrichtungs-Halteeinrichtung gemäß Fig. 6, 7, und
- Fig. 9: eine perspektivische Teilansicht der Dichtungsanordnung gemäß Figuren 6 bis 8 in montiertem Zustand.

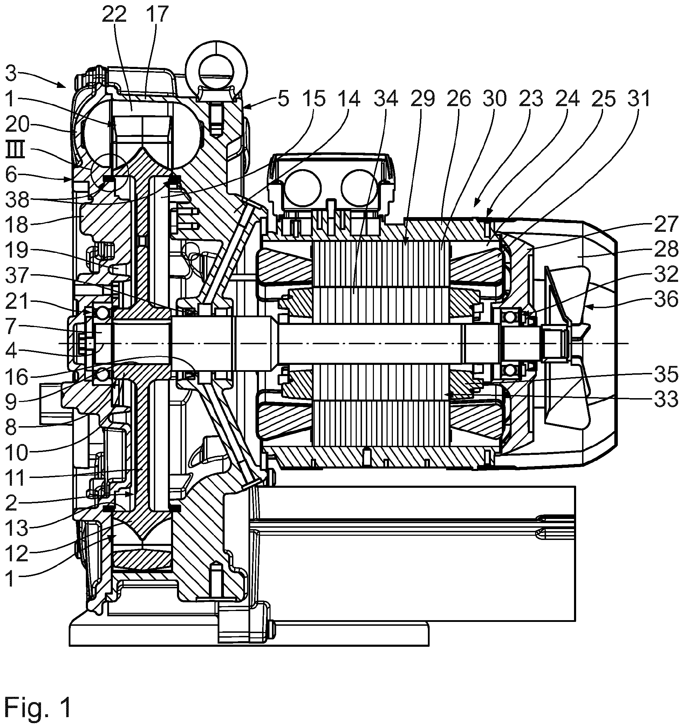

Zunächst Bezug nehmend auf Fig. 1, umfasst ein dort in seiner Gesamtheit dargestellter zusammengesetzter Seitenkanalverdichter zum Verdichten eines Gases ein mit Laufrad-Schaufeln 1 versehenes Laufrad 2, das in einem Gehäuse 3 des Seitenkanalverdichters um eine Längsmittelachse 4 drehantreibbar gelagert ist. Die Längsmittelachse 4 bildet so eine Rotationsachse.

Das Gehäuse 3 weist einen Gehäusekörper 5 und einen abnehmbaren Gehäusedeckel 6 auf, die gemäß Fig. 1 zusammengefügt sind und gemeinsam das auf einer Antriebswelle 7 drehfest angeordnete Laufrad 2 mit den Laufrad-Schaufeln 1 umschließen.

Das einkränzige Laufrad 2 ist scheibenartig ausgebildet. Es weist eine Laufrad-Nabe 8 mit einer zentralen Nabenbohrung 9 auf. Die Laufrad-Nabe 8 ist durch einen inneren, die Nabenbohrung 9 radial nach außen begrenzenden Nabenfuß 10 und eine sich an diesen anschließende, von dort nach radial außen verlaufende kreisringförmige Nabenscheibe 11 gebildet.

Das Laufrad 2 hat außerdem einen radial äußeren Tragring 12, der sich radial außen an die Nabenscheibe 11 anschließt und diese in Richtung der Längsmittelachse 4 beidseitig überlappt. Der Tragring 12 hat demnach einen der Längsmittelachse 4 zugewandten Tragringboden 13 und trägt in einer Umfangsrichtung verteilt eine Vielzahl der Laufrad-Schaufeln 1, die äquidistant zueinander angeordnet sind und von dem Tragring 12 nach radial außen vorspringen. Der Nabenfuß 10, die Nabenscheibe 11 und der Tragring 13 sind als einstückiges Gussteil ausgeführt.

Der Gehäusekörper 5 hat einen ersten Nabenabschnitt 14, der einen ersten Teil-Nabenaufnahmeraum 15 räumlich begrenzt. Der erste Nabenabschnitt 14 ist von einer zentralen Wellenbohrung 16 durchsetzt, die in den ersten Teil-Nabenaufnahmeraum 15 mündet. An den ersten Nabenabschnitt 14 schließt sich radial außen ein erster Seitenkanal-Abschnitt 17 an. Der erste Nabenabschnitt 14 und der erste Seitenkanal-Abschnitt 17 sind als einstückiges Gussteil ausgeführt und bilden den Gehäusekörper 5.

Der Gehäusedeckel 6 ist in zusammengesetztem Zustand des Gehäuses 3 mit dem Gehäusekörper 5 verschraubt. Er weist einen zweiten Nabenabschnitt 18 auf, der einen zweiten Teil-Nabenaufnahmeraum 19 räumlich begrenzt. An den zweiten Nabenabschnitt 18 schließt sich radial außen ein zweiter Seitenkanal-Abschnitt 20 an. In dem zweiten Nabenabschnitt 18 ist ein Wälzlager 21 zur Lagerung der Antriebswelle 7 angeordnet. Endseitig hat die Antriebswelle 7 einen Lagerzapfen, der durch das Wälzlager 21 drehbar gelagert ist. Der zweite Nabenabschnitt 18 und der zweite Seitenkanal-Abschnitt 20 sind als einstückiges Gussteil ausgeführt und bilden den Gehäusedeckel 6.

Der Gehäusekörper 5 und der Gehäusedeckel 6 sind derart miteinander verbunden, dass die beiden Teil-Nabenaufnahmeräume 15, 19 gemeinsam einen Naben-Aufnahmeraum begrenzen und die beiden Seitenkanal-Abschnitte 17, 20 gemeinsam einen Seitenkanal 22 zur Führung bzw. Förderung eines Gases räumlich begrenzen. Der Seitenkanal 22 erstreckt sich beabstandet ringförmig um die Längsmittelachse 4.

In dem Gehäuse 3 ist eine Gas-Einlassöffnung ausgebildet, die in den Seitenkanal 22 mündet. Ferner ist in dem Gehäuse 3 eine Gas-Auslassöffnung ausgebildet, die ebenfalls mit dem Seitenkanal 22 in Strömungsverbindung steht und benachbart, aber getrennt zu der Gas-Einlassöffnung angeordnet ist. Zwischen der Gas-Einlassöffnung und der Gas-Auslassöffnung ist in dem Seitenkanal 22 ein Unterbrecher angeordnet.

In dem Naben-Aufnahmeraum befinden sich der Nabenfuß 10 und die Nabenscheibe 11 des Laufrads 2, wobei die Nabenbohrung 9 von der Antriebswelle 7 durchdrungen ist. Die Laufrad-Schaufeln 1 befinden sich in dem Seitenkanal 22.

Zum Drehantrieb des Laufrads 2 in der Umfangsrichtung dient ein herkömmlicher Antrieb 23, der als Elektroantrieb ausgebildet ist. Der Antrieb 23 ist an dem Gehäusekörper 5 angeflanscht und hat ein Antriebsgehäuse 24, das einen Antriebs-Innenraum 25 räumlich begrenzt. Das Antriebsgehäuse 24 weist einen Mantelkörper 26 und einen an diesem stirnseitig angebrachten Lagerschild 27 sowie einen Kühlerdeckel 28 auf.

In dem Antriebs-Innenraum 25 ist ein Antriebsstator 29 untergebracht, der wiederum ein innenseitig an dem Mantelkörper 26 befestigtes Stator-Blechpaket 30 und eine Stator-Wicklung 31 umfasst. Die Stator-Wicklung 31 umfasst mehrere Spulen, die mit dem Stator-Blechpaket 30 in direkter Verbindung stehen. In dem Lagerschild 27 ist ein zweites Wälzlager 32 aufgenommen, das die Antriebswelle 7 drehbar lagert. In dem Antriebs-Innenraum 25 befindet sich außerdem ein Rotor 33, der drehfest auf der Antriebswelle 7 angeordnet ist und innerhalb des Antriebsstators 29 verläuft. Der Rotor 33 umfasst ein Rotor-Blechpaket 34 und Rotor-Stäbe 35.

Auf einem durch den Lagerschild 27 geführten Endabschnitt der Antriebswelle 27 ist ein Antriebs-Kühlerrad 36 drehfest angeordnet. Der Kühlerdeckel 28 umgibt das Antriebs-Kühlerrad 36.

Der Antrieb 23 arbeitet auf herkömmliche, allgemein bekannte Weise. Beim Anschluss an ein Stromnetz wird die Stator-Wicklung 31 stromdurchflossen, wodurch im Antriebsstator 29 ein Magnetfeld entsteht. Der Antriebsstator 29 wirkt dabei mit dem Rotor 33 zusammen. Der Rotor 33 und damit auch die Antriebswelle 7 werden dann in Rotation um die Längsmittelachse 4 versetzt.

Aus Dichtigkeitsgründen ist in dem Gehäusekörper 5 eine Antriebswellen-Dichtung 37 angeordnet, die dichtend außenseitig an der Antriebswelle 7 anliegt und dort einen Leckstrom vermeidet.

Ferner ist sowohl in dem Gehäusekörper 5 als auch in dem Gehäusedeckel 6 eine Dichtungsanordnung 38 angeordnet. Diese Dichtungsanordnungen 38 sind identisch ausgeführt.

Zur Aufnahme der Dichtungsanordnungen 38 ist in dem Gehäusekörper 5 und dem Gehäusedeckel 6 jeweils eine Ringnut 39 ausgebildet, die jeweils durch eine radial innere Innenflanke 40 und eine, der jeweiligen Innenflanke 40 gegenüberliegende, radial äußere Außenflanke 41 sowie eine die jeweilige Innenflanke 40 und Außenflanke 41 verbindende Grundflanke 42 räumlich begrenzt ist. Die Innenflanken 40 haben einen geringeren Abstand zu der Längsmittelachse 4 als die Außenflanken 41. Sie verlaufen parallel bzw. konzentrisch zu den Außenflanken 41. Die Grundflanken 42 verlaufen senkrecht zu der benachbarten Innenflanke 40 und Außenflanke 41. Die Ringnuten 39 laufen mit konstantem Abstand um die Längsmittelachse 4 und sind zu dem Naben-Aufnahmeraum hin offen.

Benachbart zu jedem Naben-Aufnahmeraum hat jede Innenflanke 40 eine Kopffläche, die an einem unter Bildung einer Rückhalteflanke 43 radial nach außen vorspringenden Ringsteg 44 ausgebildet ist. Jede Rückhalteflanke 43 verläuft ringförmig um die Längsmittelachse 4 und ist der benachbarten Grundflanke 42 der jeweiligen Ringnut 39 zugewandt. Jede Rückhalteflanke 43 verläuft parallel zu der benachbarten Grundflanke 42 der jeweiligen Ringnut 39. Sie hat eine radiale Höhe, die wesentlich kleiner als die entsprechende radiale Höhe einer Grundflanke 42 ist.

Zwischen jeder Ringnut 39 und dem Seitenkanal 22 haben der Gehäusekörper 5 und der Gehäusedeckel 6 jeweils eine Aufnahmeaussparung 45, sodass in Richtung der Längsmittelachse 4 die Innenflanken 40 länger bzw. breiter als die Außenflanken 41 sind. Der Tragring 12 greift in die Aufnahmeaussparungen 45 ein.

Jede Dichtungsanordnung 38 umfasst eine benachbart zu der jeweiligen Innenflanke 40 angeordnete Dichtungseinrichtungs-Halteeinrichtung 46 und einen Dichtungsstreifen 47, der radial außen an der jeweiligen Dichtungseinrichtungs-Halteeinrichtung 46 anliegt.

Jede Dichtungseinrichtungs-Halteeinrichtung 46 hat einen ringförmigen, bandförmigen Haltegrundkörper 48, der mit konstantem Abstand um die Längsmittelachse 4 läuft und in Richtung der Längsmittelachse 4 eine axiale Breite BF aufweist, die in etwa einer axialen Länge bzw. Breite LN einer Innenflanke 40 in Richtung der Längsmittelachse 4 entspricht. Jeder Haltegrundkörper 48 hat eine innere Anlagekante 49, die an der jeweiligen Grundflanke 42 anliegt.

Ferner hat jede Dichtungseinrichtungs-Halteeinrichtung 46 eine Vielzahl laschenartiger Federvorsprünge 50, die jeweils unter Bildung einer zu der Anlagekante 49 parallel verlaufenden Biegelinie 51 in Richtung auf die Längsmittelachse 4 herausgebogen sind. Die Biegelinien 51 verlaufen beabstandet zu der Anlagekante 49. Die Federvorsprünge 50 erstrecken sich dabei schräg bzw. gekrümmt zu dem Haltegrundkörper 48. Ausgehend von der jeweiligen Biegelinie 51 verlaufen sie von der benachbarten Anlagekante 49 weg. Jeder Federvorsprung 50 hat ein freies Ende 52, das an der jeweiligen Rückhalteflanke 43 und Innenflanke 40 abstützend anliegt. Durch das Herausbiegen der Federvorsprünge 50 aus dem jeweiligen Haltegrundkörper 48 ist in diesem eine Vielzahl von Herausbiegeöffnungen 53 gebildet, die umfangsseitig geschlossen sind.

Ferner springt von jedem Haltegrundkörper 48 eine Vielzahl von Haltevorsprüngen 54 nach radial außen vor, die gegenüberliegend zu der Anlagekante 49 angeordnet sind und unter Bildung jeweiliger Biegelinien 55 aus dem Haltegrundkörper 48 herausgebogen sind. Die Biegelinien 55 verlaufen parallel zu der Längsmittelachse 4. Ein axialer Abstand AH der Haltevorsprünge 54 zu der Anlagekante 49 der Dichtungseinrichtungs-Halteeinrichtung 46 entspricht einer axialen Breite BD eines Dichtungsstreifens 47.

Jeder Dichtungsstreifen 47 liegt radial außen an dem zugeordneten Haltegrundkörper 48 an, der so eine Tragfläche 56 für den jeweiligen Dichtungsstreifen 47 aufweist. Die Dichtungsstreifen 47 bedecken die Herausbiegeöffnungen 53. Die Haltevorsprünge 54 liegen an einer Seitenflanke 57 des jeweiligen Dichtungsstreifens 47 an, die der benachbarten Grundflanke 42 abgewandt ist bzw. dem Naben-Aufnahmeraum zugewandt ist. Jeder Dichtungsstreifen 47 liegt an der zugehörigen Grundflanke 42 und an der benachbarten Außenflanke 41 an.

Jeder Dichtungsstreifen 47 steht gegenüber der benachbarten Außenflanke 41 unter Bildung eines freien Dichtungsbereichs 58 axial in Richtung der Längsmittelachse 4 vor. Die Dichtungsbereiche 58 liegen an dem Tragringboden 13 radial innen in Bezug auf die Längsmittelachse 4 dichtend an.

Im Betrieb des Seitenkanalverdichters bewegt sich das Laufrad 2 über die Dichtungsstreifen 47, insbesondere über die freien Dichtungsbereiche 58. Jeder Dichtungsstreifen 47 überlappt einen Spalt 59 zwischen dem Tragring 12 und dem Gehäusekörper 5 bzw. Gehäusedeckel 6. Jeder Dichtungsstreifen 47 hintergreift den benachbarten Tragringboden 13.

Jede Dichtungseinrichtungs-Halteeinrichtung 46 ist beidseitig axial in Bezug auf die Längsmittelachse 4 fixiert. Dies ist durch die gleichzeitige Anlage der Anlagekante 49 an der benachbarten Grundflanke 42 bzw. dem Gehäuse 3 und durch die Anlage der Federvorsprünge 50 an der benachbarten Rückhalteflanke 43 bzw. dem Gehäuse 3 erreicht.

Jeder Dichtungsstreifen 47 ist beidseitig axial in Bezug auf die Längsmittelachse 4 fixiert. Dies ist durch die gleichzeitige Anlage des jeweiligen Dichtungsstreifens 47 an der benachbarten Grundflanke 42 bzw. dem Gehäuse 3 und an den Haltevorsprüngen 54 erreicht.

Durch die Federvorsprünge 50, die sich gegenüber den Innenflanken 40 abstützen, ist jeder Dichtungsstreifen 47 federnd radial nach außen gedrückt. Die erzeugte Federspannung ist elastisch. Jede Dichtungseinrichtungs-Haltereinrichtung 46 überträgt so dauerhaft eine nach radial außen gerichtete Federspannung auf den benachbarten Dichtungsstreifen 47 und sorgt so gegebenenfalls auch für eine automatische örtliche Nachführung desselben nach radial außen, sodass Verschleiß bzw. Verformungen des jeweiligen Dichtungsstreifens 47 automatisch ausgeglichen werden. Die Dichtungsstreifen 47 werden gegen die Außenflanken 41 und den Tragringboden 13 gepresst.

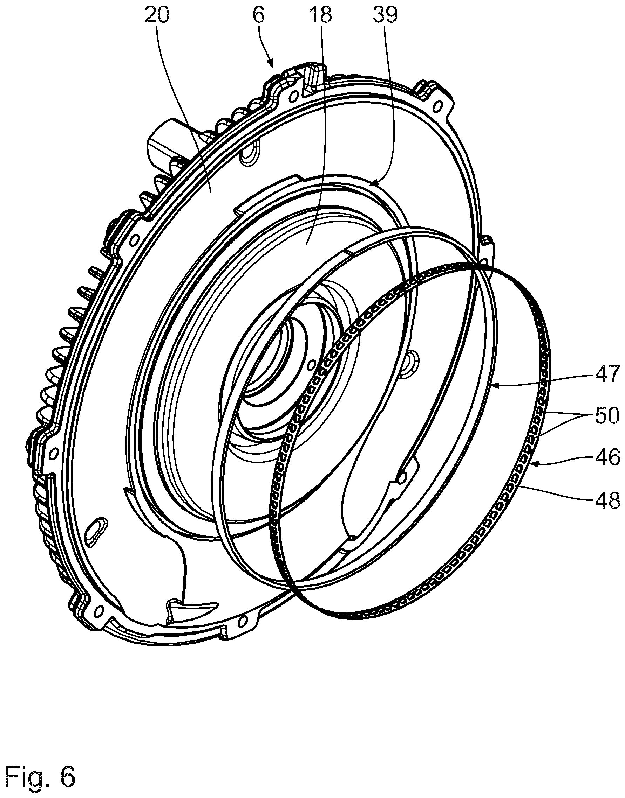

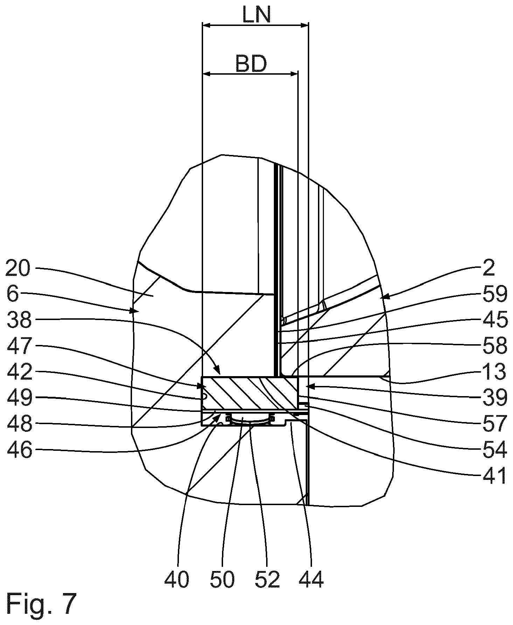

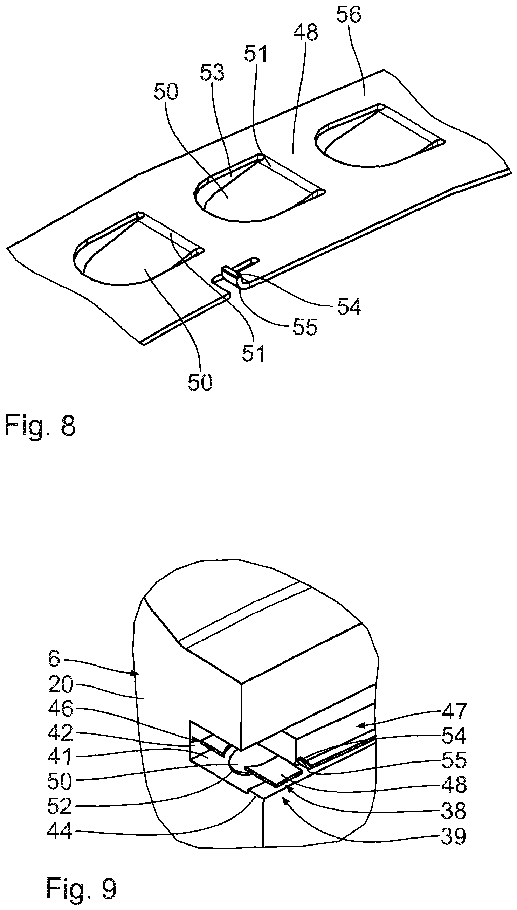

Nachfolgend wird unter Bezugnahme auf Fig. 6 bis 9 eine zweite Ausführungsform beschrieben. Im Gegensatz zu der vorherigen Ausführungsform, auf deren Beschreibung hiermit explizit verwiesen wird, sind hier die Federvorsprünge 50 aus dem Haltegrundkörper 48 unter Bildung von Biegelinien 51 herausgebogen, die sich parallel zu der Längsmittelachse 4 erstrecken. Ansonsten existieren keine wesentlichen Unterschiede.

Die verwendeten Ausdrücke "radial", "axial" oder dergleichen sind auf die Längsmittelachse 4 bezogen.

## Patentansprüche

1. Seitenkanalverdichter zum Verdichten eines Gases,
a) mit einem Gehäuse (3),
b) mit mindestens einem in dem Gehäuse (3) angeordneten Laufrad (2), das um eine Mittelachse (4) drehantreibbar ist, und
c) mit mindestens einer in dem Gehäuse (3) angeordneten Dichtungsanordnung (38), die aufweist
i) mindestens eine Dichtungseinrichtung (47), die
- mindestens einen Spalt (59) zwischen dem Gehäuse (3) und dem mindestens einen Laufrad (2) abdichtet, und
- nach radial außen in Bezug auf die Mittelachse (4) zum Kleinhalten des mindestens einen Spalts (59) zwängt, und
ii) mindestens eine Dichtungseinrichtungs-Halteeinrichtung (46), die
- die mindestens eine Dichtungseinrichtung (47) axial fixiert in Bezug auf die Mittelachse (4) hält, und
- mindestens einen Haltegrundkörper (48) aufweist, **dadurch gekennzeichnet, dass** die mindestens eine Dichtungseinrichtungs-Haltevorrichtung (46) mindestens einen von dem mindestens einen Haltegrundkörper (48) radial in Bezug auf die Mittelachse (4) vorspringenden Federvorsprung (50) aufweist, der
i) sich gegenüber dem Gehäuse (3) abstützt, und
ii) die mindestens eine Dichtungseinrichtung (47) nach radial außen in Bezug auf die Mittelachse (4) zwängt.

2. Seitenkanalverdichter nach Anspruch 1, **dadurch gekennzeichnet, dass** die mindestens eine Dichtungseinrichtungs-Halteeinrichtung (46) und die mindestens eine Dichtungseinrichtung (47) in Bezug auf die Mittelachse (4) in montiertem Zustand axial zueinander unbeweglich sind.

3. Seitenkanalverdichter nach Anspruch 1 oder 2, **dadurch gekennzeichnet, dass** die mindestens eine Dichtungseinrichtungs-Halteeinrichtung (46) mindestens einen von dem mindestens einen Haltegrundkörper (48) radial in Bezug auf die Mittelachse (4) vorspringenden Haltevorsprung (54) aufweist, der an der mindestens einen Dichtungseinrichtung (47) haltend angreift.

4. Seitenkanalverdichter nach Anspruch 3, **dadurch gekennzeichnet, dass** der mindestens eine Haltevorsprung (54) an der mindestens einen Dichtungseinrichtung (47) seitlich außen angreift.

5. Seitenkanalverdichter nach Anspruch 3 oder 4, **dadurch gekennzeichnet, dass** der mindestens eine Haltevorsprung (54) von dem mindestens einen Haltegrundkörper (48) nach radial außen in Bezug auf die Mittelachse (4) vorspringt.

6. Seitenkanalverdichter nach einem der Ansprüche 3 bis 5, **dadurch gekennzeichnet, dass** der mindestens eine Haltevorsprung (54) randseitig an dem mindestens einen Haltegrundkörper (48) angeordnet ist.

7. Seitenkanalverdichter nach einem der Ansprüche 3 bis 6, **dadurch gekennzeichnet, dass** der mindestens eine Haltevorsprung (54) von dem mindestens einen Haltegrundkörper (48) herausgebogen ist.

8. Seitenkanalverdichter nach einem der vorherigen Ansprüche, **dadurch gekennzeichnet, dass** die mindestens eine Dichtungseinrichtungs-Halteeinrichtung (46) axial in Bezug auf die Mittelachse (4) gegenüber dem Gehäuse (3) unbeweglich ist.

9. Seitenkanalverdichter nach einem der vorherigen Ansprüche, **dadurch gekennzeichnet, dass** der mindestens eine Federvorsprung (50) laschenartig ausgebildet ist.

10. Seitenkanalverdichter nach einem der vorherigen Ansprüche, **dadurch gekennzeichnet, dass** der mindestens eine Federvorsprung (50) von dem mindestens einen Haltegrundkörper (48) nach radial innen in Bezug auf die Mittelachse (4) vorspringt.

11. Seitenkanalverdichter nach einem der vorherigen Ansprüche, **dadurch gekennzeichnet, dass** der mindestens eine Federvorsprung (50) von dem mindestens einen Haltegrundkörper (48) herausgebogen ist.

12. Seitenkanalverdichter nach einem der vorherigen Ansprüche, **dadurch gekennzeichnet, dass** der mindestens eine Federvorsprung (50) randseitig beabstandet an dem mindestens einen Haltegrundkörper (48) angeordnet ist.

13. Seitenkanalverdichter nach einem der Ansprüche 3 bis 7, **dadurch gekennzeichnet, dass** der mindestens eine Haltevorsprung (54) und der mindestens eine Federvorsprung (50) in einander gegensinnigen Richtungen von dem mindestens einen Haltegrundkörper (48) radial vorspringen.

14. Seitenkanalverdichter nach einem der vorherigen Ansprüche, **dadurch gekennzeichnet, dass** die mindestens eine Dichtungseinrichtungs-Halteeinrichtung (46) einteilig ausgeführt ist.

## Claims

1. A side channel compressor for compressing a gas,
a) with a housing (3),
b) with at least one impeller (2) which is arranged in the housing (3) and which can be driven rotatably about a central axis (4), and
c) with at least one sealing arrangement (38) arranged in the housing (3), said sealing arrangement (38) having
i) at least one sealing device (47), which
- seals at least one gap (59) between the housing (3) and the at least one impeller (2), and
- presses radially outwards relative to the central axis (4) to keep the at least one gap (59) small, and
ii) at least one sealing device holding device (46), which
- holds the at least one sealing device (47) in an axially fixed manner relative to the central axis (4), and
- has at least one holding base body (48),
**characterised in that** the at least one sealing device holding apparatus (46) has at least one elastic protrusion (50) which protrudes from the at least one holding base body (48) radially relative to the central axis (4) and which
i) is supported against the housing (3), and
ii) presses the at least one sealing device (47) radially outwards relative to the central axis (4).

2. The side channel compressor according to Claim 1, **characterised in that** the at least one sealing device holding device (46) and the at least one sealing device (47), in the assembled state, are axially immovable with respect to one another relative to the central axis (4).

3. The side channel compressor according to Claim 1 or 2, **characterised in that** the at least one sealing device holding device (46) has at least one holding protrusion (54) which protrudes from the at least one holding base body (48) radially relative to the central axis (4) and which engages the at least one sealing device (47) in a holding manner.

4. The side channel compressor according to Claim 3, **characterised in that** the at least one holding protrusion (54) engages the at least one sealing device (47) laterally on the outside.

5. The side channel compressor according to Claim 3 or 4, **characterised in that** the at least one holding protrusion (54) protrudes from the at least one holding base body (48) radially outwards relative to the central axis (4).

6. The side channel compressor according to any one of Claims 3 to 5, **characterised in that** the at least one holding protrusion (54) is arranged on the edge of the at least one holding base body (48).

7. The side channel compressor according to any one of Claims 3 to 6, **characterised in that** the at least one holding protrusion (54) is bent out from the at least one holding base body (48).

8. The side channel compressor according to any one of the preceding claims, **characterised in that** the at least one sealing device holding device (46) is axially immovable with respect to the housing (3) relative to the central axis (4).

9. The side channel compressor according to any one of the preceding claims, **characterised in that** the at least one elastic protrusion (50) is configured in the style of a tab.

10. The side channel compressor according to any one of the preceding claims, **characterised in that** the at least one elastic protrusion (50) protrudes from the at least one holding base body (48) radially inwards relative to the central axis (4).

11. The side channel compressor according to any one of the preceding claims, **characterised in that** the at least one elastic protrusion (50) is bent out from the at least one holding base body (48).

12. The side channel compressor according to any one of the preceding claims, **characterised in that** the at least one elastic protrusion (50) is arranged spaced apart on the edge of the at least one holding base body (48).

13. The side channel compressor according to any one of Claims 3 to 7, **characterised in that** the at least one holding protrusion (54) and the at least one elastic protrusion (50) protrude radially from the at least one holding base body (48) in opposing directions to one another.

14. The side channel compressor according to any one of the preceding claims, **characterised in that** the at least one sealing device holding device (46) is designed as one piece.

## Revendications

1. Compresseur à canal latéral destiné à comprimer un gaz,
a) avec un boîtier (3),
b) avec au moins un rotor (2) disposé dans le boîtier (3) et pouvant être entraîné autour d'un axe central (4), et
c) avec au moins un dispositif d'étanchéité (38) disposé dans le boîtier (3) qui présente
i) au moins un moyen d'étanchéité (47), lequel
- étanchéifie au moins un espace (59) entre le boîtier (3) et au moins un rotor (2), et
- qui s'étend en force radialement vers l'extérieur par rapport à l'axe central (4) pour réduire au moins un espace (59), et
ii) au moins un dispositif de support du moyen d'étanchéité (46) qui
- maintient au moins un moyen d'étanchéité (47) de manière fixe axialement par rapport à l'axe central (4), et
- présente au moins un corps de base de maintien (48),
**caractérisé en ce qu'**au moins un dispositif de support de moyen d'étanchéité (46) présente au moins un épaulement élastique (50) faisant saillie radialement par rapport à l'axe central (4) à partir d'au moins un corps de base de maintien (48), ladite pièce
i) s'appuyant face au boîtier (3), et
ii) forçant au moins un moyen d'étanchéité (47) radialement vers l'extérieur par rapport à l'axe central (4).

2. Compresseur à canal latéral selon la revendication 1, **caractérisé en ce que,** par rapport à l'axe central (4), au moins un dispositif de support du moyen d'étanchéité (46) et au moins un moyen d'étanchéité (47) sont immobiles axialement l'un par rapport à l'autre une fois monté.

3. Compresseur à canal latéral selon la revendication 1 ou 2, **caractérisé en ce qu'**au moins un dispositif de support du moyen d'étanchéité (46) présente au moins un épaulement de maintien (54) faisant saillie radialement par apport à l'axe central (4) à partir d'au moins l'un des corps de base de maintien (48), ledit épaulement venant en prise de retenue sur au moins un moyen d'étanchéité (47).

4. Compresseur à canal latéral selon la revendication 3, **caractérisé en ce qu'**au moins un épaulement de maintien (54) prend prise latéralement vers l'extérieur sur au moins un moyen d'étanchéité (47).

5. Compresseur à canal latéral selon la revendication 3 ou 4, **caractérisé en ce qu'**au moins un épaulement de maintien (54) fait saillie à partir d'au moins un corps de base de maintien (48) radialement vers l'extérieur par rapport à l'axe central (4).

6. Compresseur à canal latéral selon l'une des revendications 3 à 5, **caractérisé en ce qu'**au moins un épaulement de maintien (54) est disposé sur le bord d'au moins un corps de base de maintien (48).

7. Compresseur à canal latéral selon l'une des revendications 3 à 6, **caractérisé en ce qu'**au moins un épaulement de maintien (54) est recourbé à l'extérieur d'au moins un corps de base de maintien (48).

8. Compresseur à canal latéral selon au moins l'une des revendications précédentes, **caractérisé en ce qu'**au moins un dispositif de support du moyen d'étanchéité (46) est immobile axialement par rapport à l'axe central (4) face au boîtier (3).

9. Compresseur à canal latéral selon au moins l'une des revendications précédentes, **caractérisé en ce qu'**au moins un épaulement élastique (50) est conçu sous forme de patte.

10. Compresseur à canal latéral selon au moins l'une des revendications précédentes, **caractérisé en ce qu'**au moins un épaulement élastique (50) fait saillie radialement vers l'intérieur à partir d'au moins un corps de base de maintien (48) par rapport à l'axe central (4).

11. Compresseur à canal latéral selon au moins l'une des revendications précédentes, **caractérisé en ce qu'**au moins un épaulement élastique (50) est recourbé à l'extérieur à partir d'au moins un corps de base de maintien (48).

12. Compresseur à canal latéral selon au moins l'une des revendications précédentes, **caractérisé en ce qu'**au moins un épaulement élastique (50) est disposé à distance sur le bord d'au moins un corps de base de maintien (48).

13. Compresseur à canal latéral selon l'une des revendications 3 à 7, **caractérisé en ce qu'**au moins un épaulement de maintien (54) et au moins un épaulement élastique (50) font saillie radialement dans des directions opposées l'une à l'autre à partir d'au moins un corps de base de maintien (48).

14. Compresseur à canal latéral selon au moins l'une des revendications précédentes, **caractérisé en ce qu'**au moins un dispositif de support du moyen d'étanchéité (46) est réalisé d'une seule pièce.
